# FASCICULE DE BREVET EUROPEEN

(11) **EP 4 406 692 B1**
(45) Date de publication et mention de la délivrance du brevet: **15.10.2025**
(21) Numéro de dépôt: 24153459.3
(22) Date de dépôt: 23.01.2024
(51) Int. Cl.: B23P 19/00, B23P 19/04, B65C 9/18, B65C 9/36

(54) **SYSTÈME DE DÉLIVRANCE D'UNE PLURALITÉ DE PASTILLES ADHÉSIVES**
SYSTEM ZUR ABGABE EINER VIELZAHL VON KLEBEPELLETS
SYSTEM FOR DELIVERING A PLURALITY OF ADHESIVE PADS

(30) Priorité: 26.01.2023 FR 2300715
(43) Date de publication de la demande: 31.07.2024
(73) Titulaire: ADHEX TECHNOLOGIES, 21300 Chenôve (FR)
(72) Inventeur: LUIZARD, François, 21000 DIJON (FR); DURAND, Hervé, 21000 DIJON (FR); RAPENNE, Emmanuel, 21850 SAINT APOLLINAIRE (FR)
(74) Mandataire: Cabinet Bleger-Rhein-Poupon

(56) Documents cités:
- EP-A1- 3 587 316
- EP-A1- 3 808 497
- EP-A1- 3 878 607
- DE-A1- 102018 217 921
- JP-A- 2018 176 312

## Description

L'invention concerne un système de délivrance d'une pluralité de pastilles adhésives ainsi qu'une installation de dépose d'une pluralité de pastilles adhésives qui comporte au moins un tel système de délivrance d'une pluralité de pastilles adhésives.

La présente invention concerne le domaine de la fabrication des systèmes qui sont configurés pour délivrer, de manière automatique, une pluralité de pastilles adhésives à un dispositif de dépose qui est configuré, d'une part, pour saisir au moins une telle pastille adhésive auprès d'un tel système de délivrance d'une pluralité de pastilles adhésives, d'autre part, pour déplacer au moins une telle pastille adhésive saisie en direction d'un endroit approprié d'un substrat et, d'autre part encore, pour déposer une telle pastille adhésive en cet endroit de ce substrat.

Sans n'y être aucunement limitée, l'invention trouvera une application particulièrement appropriée lorsqu'il s'agit de délivrer au moins une pastille adhésive à un dispositif de dépose d'au moins une telle pastille adhésive sur un substrat qui adopte la forme d'un élément de véhicule automobile, plus particulièrement un élément de carrosserie de véhicule automobile, plus spécifiquement lorsqu'il s'agit d'obturer une ouverture que comporte un tel élément de véhicule automobile avec une telle pastille adhésive.

On connait, d'ores et déjà, et par les documents EP3808497A1 et JP2018176312A une installation de dépose d'une pluralité de pastilles adhésives qui comporte, d'une part, un système de délivrance d'une pluralité de pastilles adhésives et, d'autre part, un dispositif de dépose de ces pastilles adhésives, auquel le système de délivrance d'une pluralité de pastilles adhésives délivre une pluralité de pastilles adhésives, et qui est configuré pour déposer ces pastilles adhésives sur un élément de véhicule automobile. Dans cette installation, les pastilles adhésives sont collées sur une bande pour former un ensemble qui est enroulé sous la forme d'un rouleau qui alimente des moyens de délivrance qui sont configurés pour délivrer des pastilles adhésives au dispositif de dépose de ces pastilles adhésives. Une telle installation présente l'inconvénient de délivrer (et donc de pouvoir déposer) des pastilles adhésives qui correspondent à un unique type de pastille adhésive, à savoir des pastilles adhésives qui présentent la même forme et la même composition.

On connait, également, des installations de dépose d'une pluralité de pastilles adhésives qui comportent, d'une part, une pluralité de dispositifs de délivrance d'au moins une pastille adhésive qui peuvent délivrer, chacun, des pastilles adhésives d'un type différent et, d'autre part, un dispositif de dépose qui comporte un unique moyen de préhension qui est configuré, d'une part, pour saisir une unique pastille adhésive auprès de l'un des dispositifs de délivrance d'au moins une pastille adhésive, d'autre part, pour déplacer ladite unique pastille adhésive en direction d'un endroit approprié d'un élément de véhicule automobile et, d'autre part encore, pour déposer cette unique pastille adhésive en cet endroit de l'élément de véhicule automobile. Une telle installation impose audit dispositif de dépose de procéder à un aller-retour entre les dispositifs de délivrance d'au moins une pastille adhésive et les endroits de dépose d'une telle pastille adhésive, ceci pour chaque pastille adhésive à déposer. Une telle installation permet, alors, de déposer uniquement un nombre limité de pastilles adhésives par minute de sorte que la cadence de dépose des pastilles adhésives est particulièrement limitée.

On connait, également et par le document EP3878607A1, un dispositif de dépose d'au moins une pastille adhésive sur un élément de véhicule automobile. Ce dispositif de dépose comporte une pluralité de doigts, qui sont mobiles par rapport à une platine, et qui sont configurés, chacun et successivement, d'une part, pour adopter une position de préhension dans laquelle un tel doigt saisit une pastille adhésive au niveau d'un dispositif de délivrance d'au moins une pastille adhésive, d'autre part et après avoir saisi une telle pastille adhésive, pour adopter une position d'attente dans laquelle un tel doigt attend de déposer ladite pastille adhésive sur un élément de véhicule automobile pendant qu'un autre doigt adopte une position de préhension dans laquelle cet autre doigt saisit une autre pastille adhésive et, d'autre part encore et après qu'au moins une partie des doigts du dispositif de dépose ait saisi une pastille adhésive, pour être amenés par le dispositif de dépose au niveau d'un élément de véhicule automobile afin d'y déposer successivement lesdites pastilles adhésives. Ce dispositif de dépose est configuré pour saisir successivement une pluralité de pastilles adhésives auprès d'une pluralité de dispositifs de délivrance d'au moins une pastille adhésive. Compte tenu du nombre important de doigts que comporte le dispositif de dépose, il est nécessaire de remplacer fréquemment les rouleaux, qui comportent une bande ainsi que des pastilles adhésives collées sur cette bande, que comportent les dispositifs de délivrance, et à partir desquels les pastilles adhésives sont délivrées. Un tel remplacement, d'une part, ralentit la cadence de préhension et, donc, de dépose des pastilles adhésives et, d'autre part, est assuré par un opérateur qui opère dans une zone dans laquelle le dispositif de dépose (usuellement associé à un bras mobile que comporte un robot) évolue ce qui représente un danger pour cet opérateur

La présente invention se veut de remédier aux inconvénients des systèmes de délivrance d'au moins une pastille adhésive et des dispositifs de dépose d'au moins une telle pastille adhésive de l'état de la technique.

A cet effet, l'invention concerne un système de délivrance d'une pluralité de pastilles adhésives, ce système de délivrance comporte, d'une part, un châssis, d'autre part, au moins deux dispositifs de délivrance d'au moins une pastille adhésive qui sont configurés, chacun, pour délivrer au moins une pastille adhésive et, d'autre part encore, des moyens de montage en déplacement qui sont configurés pour monter au moins un dispositif de délivrance d'au moins une pastille adhésive parmi lesdits au moins deux dispositifs de délivrance d'au moins une pastille adhésive, ceci en déplacement, d'une part, par rapport au châssis et, d'autre part, entre une position rétractée et une position déployée par rapport au châssis.

Selon une autre caractéristique, les moyens de montage en déplacement comportent des moyens de montage en translation dudit au moins un dispositif de délivrance d'au moins une pastille adhésive par rapport au châssis.

Encore une autre caractéristique concerne le fait que les moyens de montage en translation comportent, d'une part, au moins une glissière qui est associée audit au moins un dispositif de délivrance d'au moins une pastille adhésive, respectivement audit châssis et, d'autre part, au moins un coulisseau qui est associé audit châssis, respectivement audit au moins un dispositif de délivrance, et qui coopère avec ladite glissière.

Une autre caractéristique consiste en ce que le système de délivrance d'une pluralité de pastilles adhésives comporte, d'une part, au moins un tiroir qui est monté en déplacement par rapport au châssis et par l'intermédiaire des moyens de montage en déplacement et, d'autre part, des moyens de fixation qui sont configurés pour fixer de manière réversible ledit au moins un dispositif de délivrance d'au moins une pastille adhésive sur ledit au moins un tiroir.

Selon une autre caractéristique, lesdits au moins deux dispositifs de délivrance d'au moins une pastille adhésive présentent, chacun, d'une part, une partie amont qui comporte des moyens de délivrance qui sont configurés pour délivrer au moins une pastille adhésive et, d'autre part, une partie avale qui comporte des moyens de stockage qui sont configurés pour stocker des pastilles adhésives ainsi que pour alimenter les moyens de délivrance avec ces pastilles adhésives. Dans ce système de délivrance, lesdits au moins deux dispositifs de délivrance d'au moins une pastille adhésive sont positionnés en sorte que, d'une part, les parties avales desdits au moins deux dispositifs de délivrance d'au moins une pastille adhésive sont juxtaposées et, d'autre part, les parties amonts desdits au moins deux dispositifs de délivrance d'au moins une pastille adhésive sont, selon le cas, juxtaposées ou positionnées de part et d'autre des parties avales.

Encore une autre caractéristique concerne le fait qu'au moins l'un desdits dispositifs de délivrance d'au moins une pastille adhésive comporte, d'une part, une platine, d'autre part, un ensemble, qui comporte une bande ainsi qu'au moins une pastille adhésive collée sur cette bande, et qui comporte une partie qui est enroulée sous la forme d'un rouleau qui est monté en rotation autour d'un axe sur la platine, d'autre part aussi, des moyens de décollement qui sont configurés pour décoller au moins une partie de ladite au moins une pastille adhésive par rapport à ladite bande, d'autre part encore, des moyens d'entraînement en déplacement dudit ensemble au moins par rapport aux moyens de décollement et, d'autre part également, des moyens d'enroulement de la bande après le décollement de ladite au moins une pastille adhésive.

Ainsi, l'invention concerne un système de délivrance d'au moins une pluralité de pastilles adhésives qui comporte des moyens de montage en déplacement d'au moins un dispositif de délivrance d'au moins une pastille adhésive (parmi lesdits au moins deux dispositifs de délivrance d'au moins une pastille adhésive), ceci par rapport au châssis ainsi qu'entre une position rétractée et une position déployée par rapport au châssis.

Ces moyens de montage en déplacement permettent, avantageusement, de déplacer ledit au moins un dispositif de délivrance d'au moins une pastille adhésive d'une position rétractée (dans laquelle ledit au moins un dispositif de délivrance délivre au moins une pastille adhésive à un dispositif de dépose d'au moins une telle pastille adhésive) vers une position déployée (dans laquelle il est possible de retirer, hors du système de délivrance conforme à l'invention, ledit au moins un dispositif de délivrance d'au moins une pastille adhésive, ceci lorsque celui-ci a délivré toutes ses pastilles adhésives et en vue de le remplacer par un nouveau dispositif de délivrance d'au moins une pastille adhésive). Ces moyens de montage en déplacement permettent, alors avantageusement, de remplacer un dispositif de délivrance d'au moins une pastille adhésive que comporte le système de délivrance conforme à l'invention par un autre dispositif de délivrance d'au moins une pastille adhésive, ceci pendant que le dispositif de dépose continue de saisir des pastilles adhésives auprès d'autres dispositifs de délivrance d'au moins une pastille adhésive que comporte le système de délivrance conforme à l'invention. Le système de délivrance d'une pluralité de pastilles adhésives conforme à l'invention permet, donc, une délivrance de pastilles adhésives de manière ininterrompue et en continu. De plus, les moyens de montage en déplacement permettent d'amener ledit au moins un dispositif de délivrance d'au moins une pastille adhésive dans une position déployée qui se situe en dehors d'une zone de déplacement du dispositif de dépose, donc dans une zone sécurisée dans laquelle un opérateur peut, sans risque et sans danger, interchanger les dispositifs de délivrance d'au moins une pastille adhésive.

D'autres buts et avantages de la présente invention apparaîtront au cours de la description qui va suivre se rapportant à des modes de réalisation qui ne sont donnés qu'à titre d'exemples indicatifs et non limitatifs.

La compréhension de cette description sera facilitée en se référant aux dessins joints en annexe et dans lesquels :

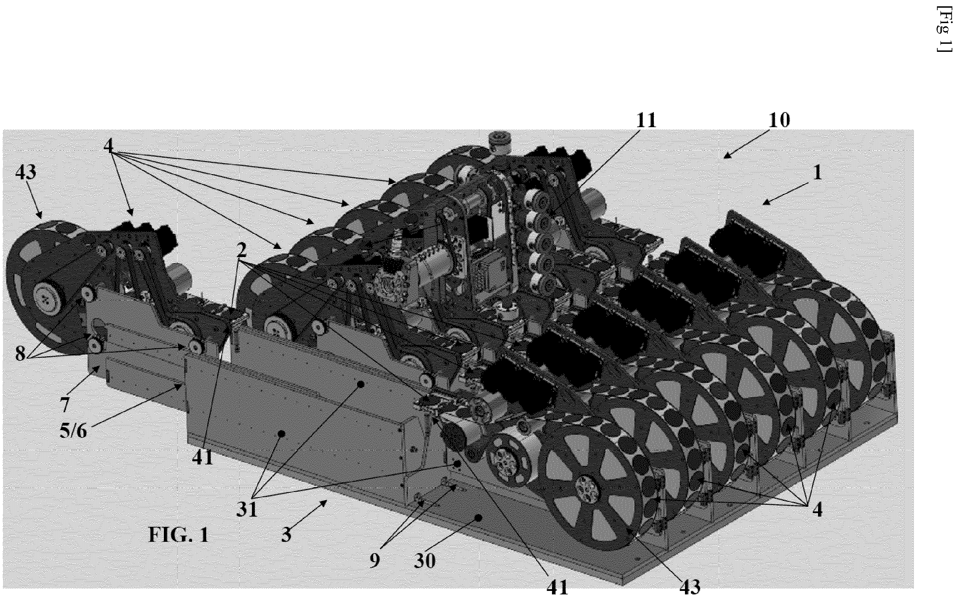

[Fig 1] est une vue schématisée et en perspective d'une installation de dépose d'une pluralité de pastilles adhésives conforme à la présente invention et qui comporte un système de délivrance d'une pluralité de pastilles adhésives conforme à l'invention.

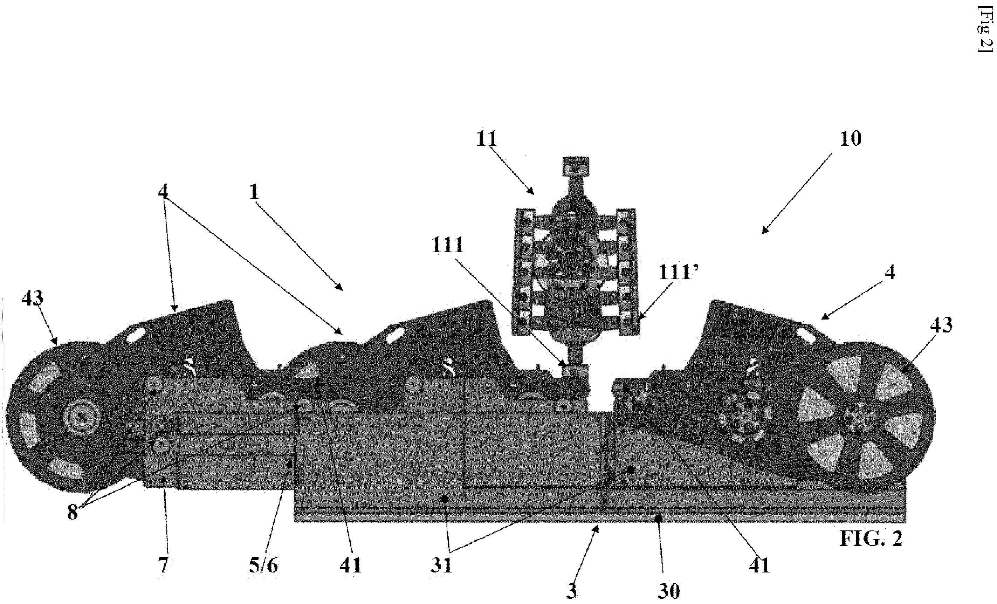

[Fig 2] est une vue schématisée et de côté de l'installation de dépose d'une pluralité de pastilles adhésives illustrée figure 1.

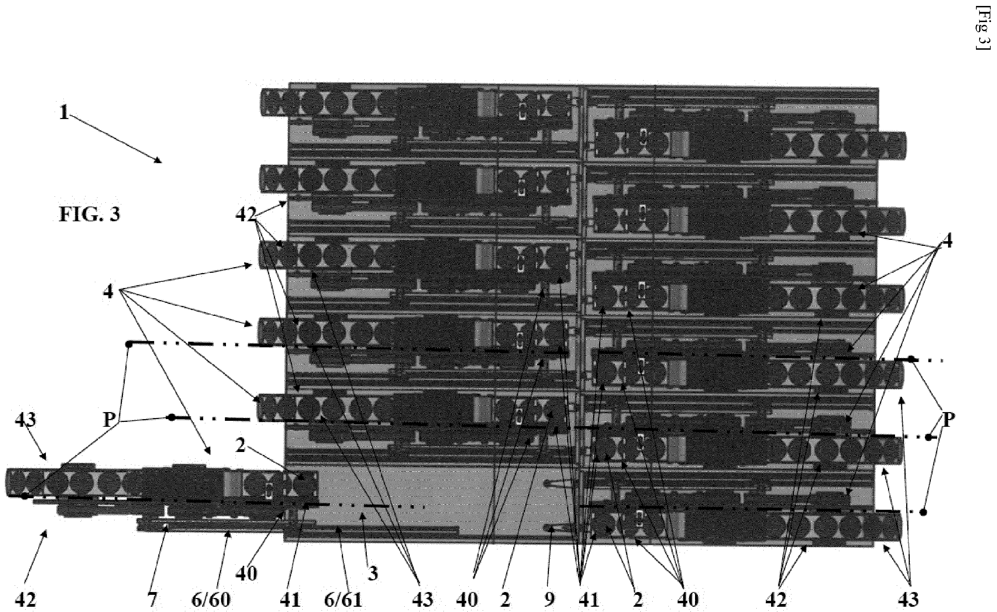

[Fig 3] est une vue schématisée et de dessus du système de délivrance d'une pluralité de pastilles adhésives illustré figures 1 et 2.

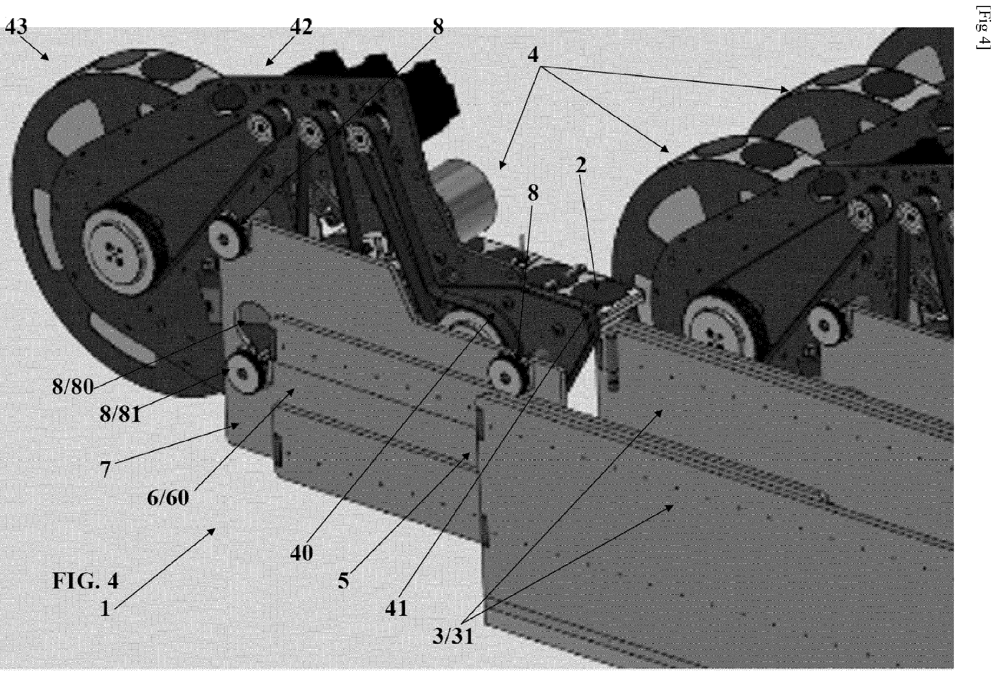

[Fig 4] est une vue schématisée, en perspective, et correspondant à un détail du système de délivrance d'une pluralité de pastilles adhésives illustré dans les fi-gures 1 à 3.

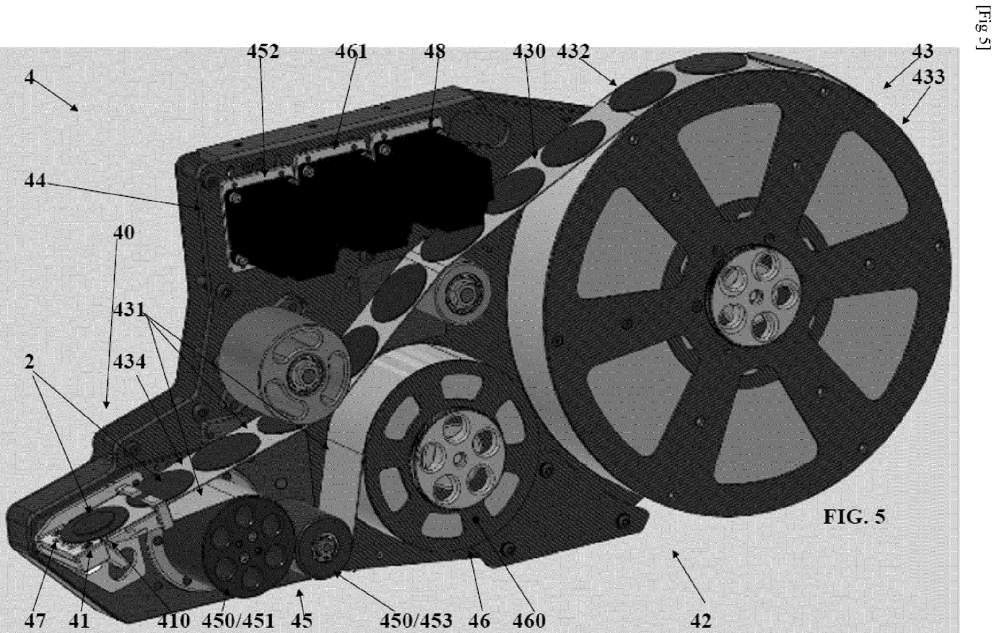

[Fig 5] est une vue schématisée, en perspective, et correspondant à un dispositif de délivrance d'au moins une pastille adhésive que comporte le système de délivrance d'une pluralité de pastilles adhésives illustré dans les figures 1 à 4.

En référence notamment aux figures susmentionnées, la présente invention concerne le domaine de la fabrication des systèmes qui sont configurés pour délivrer, de manière automatique, une pluralité de pastilles adhésives à un dispositif de dépose d'au moins une telle pastille adhésive en un endroit approprié d'un substrat.

L'invention concerne, alors, un système de délivrance 1 d'au moins une pastille adhésive 2.

Pour des raisons de simplification, dans la suite de la description, le système de délivrance 1 d'au moins une pastille adhésive 2 sera dénommé « système de délivrance 1 ».

Un tel système de délivrance 1 comporte un châssis 3 qui comporte, d'une part, une platine 30 qui s'étend selon un plan et, d'autre part, au moins une paroi 31 qui s'étend à partir de la platine 30 ainsi que selon une direction sensiblement perpendiculaire au plan selon lequel cette platine 30 s'étend.

Un tel système de délivrance 1 comporte, également, au moins deux dispositifs de délivrance 4 d'au moins une pastille adhésive 2. Lesdits au moins deux dispositifs de délivrance 4 d'au moins une pastille adhésive 2 sont configurés, chacun, pour délivrer au moins une pastille adhésive 2.

A ce propos, on observera que, d'une part, au moins un dispositif de délivrance 4 d'au moins une pastille adhésive 2 parmi lesdits au moins deux dispositifs de délivrance 4 d'au moins une pastille adhésive 2 (que comporte le système de délivrance 1) est configuré pour délivrer au moins une pastille adhésive 2 qui présente, selon le cas, une taille déterminée et/ou une forme déterminée et/ou une composition déterminée et/ou une structure déterminée et, d'autre part, au moins un autre dispositif de délivrance 4 d'au moins une pastille adhésive 2 parmi lesdits au moins deux dispositifs de délivrance 4 d'au moins une pastille adhésive 2 est configuré pour délivrer au moins une pastille adhésive 2 qui présente, selon le cas, une autre taille et/ou une autre forme et/ou une autre composition et/ou une autre structure.

De manière alternative ou (et de préférence) additionnelle, au moins deux dispositifs de délivrance 4 d'au moins une pastille adhésive 2, parmi lesdits au moins deux dispositifs de délivrance 4 d'au moins une pastille adhésive 2 que comporte ledit système de délivrance 1, sont similaires, voire identiques.

Selon l'invention, le système de délivrance 1 comporte, encore, des moyens de montage en déplacement 5 qui sont configurés pour monter au moins un dispositif de délivrance 4 d'au moins une pastille adhésive 2 parmi lesdits au moins deux dispositifs de délivrance 4 d'au moins une pastille adhésive 2, ceci en déplacement, d'une part, par rapport au châssis 3 et, d'autre part, entre une position rétractée et une position déployée par rapport au châssis 3.

Selon un mode de réalisation préféré de l'invention, ces moyens de montage en déplacement 5 sont configurés pour monter lesdits au moins deux dispositifs de délivrance 4 d'au moins une pastille adhésive 2 (voire encore l'ensemble des dispositifs de délivrance 4 d'au moins une pastille adhésive 2) que comporte le système de délivrance 1, ceci en déplacement, d'une part, par rapport au châssis 3 et, d'autre part, entre une position rétractée et une position déployée (fi-gures 1 à 4) par rapport au châssis 3.

Dans les figures en annexe, il a été illustré un système de délivrance 1, qui comporte au moins deux dispositifs de délivrance 4 d'au moins une pastille adhésive 2, et dans lequel l'un desdits au moins deux dispositifs de délivrance 4 d'au moins une pastille adhésive 2 adopte une position déployée tandis que les autres desdits au moins deux dispositifs de délivrance 4 d'au moins une pastille adhésive 2 adoptent une position rétractée.

Tel que visible sur les figures en annexe, les moyens de montage en déplacement 5 comportent des moyens de montage en translation 6 dudit au moins un dispositif de délivrance 4 d'au moins une pastille adhésive 2 parmi lesdits au moins deux dispositifs de délivrance 4 d'au moins une pastille adhésive 2, ceci par rapport au châssis 3.

En fait, de tels moyens de montage en translation 6 sont, plus particulièrement, configurés pour monter ledit au moins un dispositif de délivrance 4 d'au moins une pastille adhésive 2 en translation par rapport au châssis 3, ceci selon une direction parallèle au plan selon lequel s'étend la platine 30 de ce châssis 3.

A ce propos, on observera que, selon un mode de réalisation préféré, les moyens de montage en translation 6 comportent, d'une part, au moins une glissière 60 qui est associée audit au moins un dispositif de délivrance 4 d'au moins une pastille adhésive 2 et, d'autre part, au moins un coulisseau 61 qui est associé audit châssis 3. Un tel coulisseau 61 est, alors, fixe par rapport au châssis 3 et c'est par rapport à un tel coulisseau 61 que la glissière 60 coulisse.

De manière alternative, les moyens de montage en translation 6 peuvent comporter, d'une part, au moins une glissière 60 qui est associée audit châssis 3 et, d'autre part, au moins un coulisseau 61, qui est associé audit au moins un dispositif de délivrance 4 d'au moins une pastille adhésive 2, et qui coulisse par rapport à la glissière 60.

Tel que mentionné ci-dessus, le châssis 3 comporte au moins une paroi 31 qui s'étend à partir de la platine 30.

C'est, plus particulièrement, ladite au moins une paroi 31 qui reçoit, alors, ledit au moins un coulisseau 61 (mode de réalisation préféré décrit ci-dessus), respectivement ladite glissière 60 (mode de réalisation alternatif décrit ci-dessus).

Encore une autre caractéristique concerne le fait que le système de délivrance 1 comporte au moins un tiroir 7 qui est monté en déplacement par rapport au châssis 3 et par l'intermédiaire des moyens de montage en déplacement 5.

De manière additionnelle, ce système de délivrance 1 comporte, alors, des moyens de fixation 8 qui sont configurés pour fixer de manière réversible ledit au moins un dispositif de délivrance 4 d'au moins une pastille adhésive 2 sur ledit au moins un tiroir 7.

De tels moyens de fixation 8 comportent, d'une part, au moins une boutonnière 80 que comporte ledit au moins un tiroir 7 et, d'autre part, au moins un bouton 81, que comporte ou qui équipe ledit au moins un dispositif de délivrance 4 d'au moins une pastille adhésive 2, et qui coopère avec ladite au moins une boutonnière 80. A ce propos, on observera qu'un tel bouton 81 peut équiper une platine que comporte ledit au moins un dispositif de délivrance 4 d'au moins une pastille adhésive 2 comme il sera décrit plus en détail ci-dessous.

Encore une autre caractéristique concerne le fait que lesdits au moins deux dispositifs de délivrance 4 d'au moins une pastille adhésive 2, d'une part, s'étendent, chacun, selon un plan P (qui peut être un plan médian d'un tel dispositif de délivrance 4) et, d'autre part, sont positionnés en sorte que les plans P, selon lesquels lesdits au moins deux dispositifs de délivrance 4 d'au moins une pastille adhésive 2 s'étendent, sont au moins parallèles.

Encore une autre caractéristique concerne le fait que lesdits au moins deux dispositifs de délivrance 4 d'au moins une pastille adhésive 2 présentent, chacun, d'une part, une partie avale 40 qui comporte des moyens de délivrance 41 qui sont configurés pour délivrer au moins une pastille adhésive 2 et, d'autre part, une partie amont 42 qui comporte des moyens de stockage 43 qui sont configurés pour stocker des pastilles adhésives 2 ainsi que pour alimenter les moyens de délivrance 41 avec ces pastilles adhésives 2.

A ce propos, on observera que lesdits au moins deux dispositifs de délivrance 4 d'au moins une pastille adhésive 2 sont, alors, positionnés en sorte que, d'une part, les parties avales 40 desdits au moins deux dispositifs de délivrance 4 d'au moins une pastille adhésive 2 sont juxtaposées, ceci en position rétractée desdits au moins deux dispositifs de délivrance 4 d'au moins une pastille adhésive 2.

D'autre part et en ce qui concerne les parties amonts 42 desdits au moins deux dispositifs de délivrance 4 d'au moins une pastille adhésive 2, celles-ci 42 peuvent être juxtaposées, ceci en position rétractée desdits au moins deux dispositifs de délivrance 4 d'au moins une pastille adhésive 2. Dans un pareil cas, lesdits au moins deux dispositifs de délivrance 4 d'au moins une pastille adhésive 2 (voire les plans P, notamment les plans médians, selon lesquels lesdits au moins deux dispositifs de délivrance 4 d'au moins une pastille adhésive 2 s'étendent) sont parallèles et lesdits au moins deux dispositifs de délivrance 4 d'au moins une pastille adhésive 2 sont juxtaposés et orientés dans une même direction.

De manière alternative, les parties amonts 42 desdits au moins deux dispositifs de délivrance 4 d'au moins une pastille adhésive 2 sont positionnées de part et d'autre des parties avales 40 de ces au moins deux dispositifs de délivrance 4 d'au moins une pastille adhésive 2, ceci en position rétractée desdits au moins deux dispositifs de délivrance 4 d'au moins une pastille adhésive 2. Dans un pareil cas, lesdits au moins deux dispositifs de délivrance 4 d'au moins une pastille adhésive 2 sont orientés dans une direction opposée, voire positionnés face à face, plus particulièrement en sorte que leurs parties avales 40 soient face à face. De plus, les plans P (notamment les plans médians), selon lesquels lesdits au moins deux dispositifs de délivrance 4 d'au moins une pastille adhésive 2 s'étendent, sont au moins parallèles, voire confondus.

Selon un mode préféré de réalisation et tel que visible sur les figures en annexe, les parties amonts 42 d'une partie desdits au moins deux dispositifs de délivrance 4 d'au moins une pastille adhésive 2 sont juxtaposées (ceci tel que décrit ci-dessus) tandis que les parties amonts 42 d'une autre partie desdits au moins deux dispositifs de délivrance 4 d'au moins une pastille adhésive 2 sont positionnées de part et d'autre des parties avales 40 (ceci tel que décrit ci-dessus), ceci en position rétractée desdits au moins deux dispositifs de délivrance 4 d'au moins une pastille adhésive 2.

Selon une autre caractéristique, dans ledit système de délivrance 1, au moins un dispositif de délivrance 4 d'au moins une pastille adhésive 2 parmi lesdits au moins deux dispositifs de délivrance 4 d'au moins une pastille adhésive 2 comporte, d'une part, une platine 44, plus particulièrement qui s'étend selon un plan.

D'autre part, ledit au moins un dispositif de délivrance 4 d'au moins une pastille adhésive 2 comporte lesdits moyens de stockage 43 qui comportent un ensemble 430, d'une part, qui comporte une bande 431 ainsi qu'au moins une pastille adhésive 2 collée sur cette bande 431, et, d'autre part, qui comporte aussi une partie 432 qui est enroulée sous la forme d'un rouleau 433 qui est monté en rotation autour d'un axe (qui est de préférence perpendiculaire au plan selon lequel la platine 44 s'étend) sur la platine 44 (ceci par l'intermédiaire de moyens de montage en rotation que comporte ledit au moins un dispositif de délivrance 4) ainsi qu'une autre partie 434 qui s'étend à partir de ce rouleau 433.

D'autre part aussi, ledit au moins un dispositif de délivrance 4 d'au moins une pastille adhésive 2 comporte lesdits moyens de délivrance 41 d'au moins une pastille adhésive 2. Ces moyens de délivrance 41 comportent des moyens de décollement 410, qui sont configurés pour décoller au moins une partie de ladite au moins une pastille adhésive 2 par rapport à ladite bande 431, et qui sont montés sur la platine 44.

D'autre part encore, ledit au moins un dispositif de délivrance 4 d'au moins une pastille adhésive 2 comporte des moyens d'entraînement en déplacement 45 dudit ensemble 430 au moins par rapport aux moyens de décollement 410.

D'autre part également, ledit au moins un dispositif de délivrance 4 d'au moins une pastille adhésive 2 comporte des moyens d'enroulement 46 de la bande 431 après le décollement de ladite au moins une pastille adhésive 2 par rapport à la bande 431.

Encore une autre caractéristique concerne le fait que ledit au moins un dispositif de délivrance 4 comporte, en regard des moyens de décollement 410, des moyens de réception 47 qui sont configurés pour recevoir au moins une portion de ladite au moins une partie décollée de ladite au moins une pastille adhésive 2 par rapport à ladite bande 431. Ces moyens de réception 47 comportent, alors, des moyens de limitation de l'adhésion qui sont configurés pour au moins limiter (voire pour empêcher) l'adhésion de ladite au moins une partie décollée de ladite au moins une pastille adhésive 2 sur ces moyens de réception 47.

A ce propos, on observera que de tels moyens de limitation de l'adhésion peuvent comporter un revêtement, qui est en un matériau qui limite (voire qui empêche) l'adhésion, et que comportent, alors, les moyens de réception 47. De manière particulière, de tels moyens de limitation de l'adhésion peuvent alors être constitués par un tel revêtement.

De manière alternative, au moins une partie des moyens de réception 47 est en un matériau qui limite (voire empêche) l'adhésion. Ladite au moins une partie de ces moyens de réception 47 constitue, alors, les moyens de limitation de l'adhésion. Selon un mode de réalisation particulier, les moyens de réception 47 sont, au moins en partie (voire intégralement), constitués par de tels moyens de limitation de l'adhésion.

On observera que le matériau qui limite l'adhésion peut être un matériau antiadhérent, plus particulièrement du polytétrafluoroéthylène (PTFE).

Tel que mentionné ci-dessus, ledit au moins un dispositif de délivrance 4 comporte des moyens de réception 47 qui sont configurés pour recevoir ladite au moins une portion de ladite au moins une partie décollée de ladite au moins une pastille adhésive 2 par rapport à la bande 431. A ce propos, on observera que ces moyens de réception 47 sont, en fait, configurés pour recevoir ladite au moins une portion de ladite au moins une partie décollée de ladite au moins une pastille adhésive 2, ceci dans l'attente de la préhension (plus particulièrement par des moyens de préhension 111 qui seront décrits ci-dessous) d'une telle pastille adhésive 2 et de la dépose (plus particulièrement par un dispositif de dépose 11 décrit ci-dessous), d'une telle pastille adhésive 2 sur un élément d'un véhicule automobile, plus particulièrement sur un élément de carrosserie d'un tel véhicule automobile, notamment en vue de l'obturation d'un orifice (plus particulièrement traversant) que comporte un tel élément de véhicule automobile.

Tel que mentionné ci-dessus, ledit au moins un dispositif de délivrance 4 comporte des moyens de décollement 410. Selon une autre caractéristique, ces moyens de décollement 410 sont configurés en sorte que, en amont et au moins à proximité (voire au niveau) de ces moyens de décollement 410, ledit ensemble 430 (plus particulièrement l'autre partie 434 de l'ensemble 430 qui s'étend à partir du rouleau 433) s'étend selon un plan déterminé. Les moyens de réception 47 comportent, alors, une surface de réception qui est configurée pour recevoir ladite au moins une portion de ladite au moins une partie décollée de ladite au moins une pastille adhésive 2 qui s'étend selon ce plan déterminé. C'est, plus particulièrement, cette surface de réception qui comporte, alors, lesdits moyens de limitation de l'adhésion.

Une autre caractéristique concerne le fait que les moyens de décollement 410 comportent des moyens de renvoi qui sont configurés pour renvoyer la bande 431 depuis le rouleau 433 et en direction des moyens d'entraînement en déplacement 45.

De tels moyens de renvoi peuvent comporter un cylindre de renvoi, qui est de faible diamètre (plus particulièrement qui présente un diamètre compris entre 8 et 15mm), et qui est monté en rotation, sur la platine 44, autour d'un axe de rotation parallèle à l'axe de rotation du rouleau 433 et perpendiculaire au plan de la platine 44.

Cependant et selon un mode préféré de réalisation, ces moyens de renvoi comportent un élément, qui adopte une forme de coin, et qui présente deux faces qui adoptent entre elles un angle aigu.

Tel que mentionné ci-dessus, ledit au moins un dispositif de délivrance 4 comporte des moyens d'entraînement en déplacement 45 dudit ensemble 430.

Ces moyens d'entraînement en déplacement 45 comportent des moyens de traction 450 qui sont configurés pour exercer une traction au moins sur la bande 431.

Tel que visible sur les figures en annexe, ces moyens de traction 450 comportent, d'une part, un cylindre de traction 451, qui est monté en rotation autour d'un axe sur la platine 44, et sur au moins une partie duquel la bande 431 s'enroule et, d'autre part, des moyens (de préférence motorisés) d'entraînement en rotation 452 dudit cylindre de traction 451.

Un tel cylindre de traction 451 peut présenter une surface, qui coopère avec la bande 431, et qui comporte des moyens de friction, plus particulièrement sous la forme d'éléments en relief, notamment des stries. Ces moyens de friction permettent, avantageusement, d'améliorer l'accrochage de la bande 431 sur le cylindre de traction 451 et, ainsi, d'améliorer l'entraînement en déplacement de cette bande 431 et, donc, de l'ensemble 430.

De manière alternative ou (et de préférence) additionnelle, ce cylindre de traction 451 présente un diamètre compris entre 70 et 90mm.

De manière additionnelle, les moyens de traction 450 peuvent, encore, comporter des moyens de répulsion 453 qui sont configurés pour au moins repousser la bande 431 (dépourvue de pastille adhésive 2) en direction du cylindre de traction 451, ceci avec une force de répulsion déterminée.

En fait, ces moyens de répulsion 453 sont, plus particulièrement, configurés pour plaquer cette bande 431 contre le cylindre de traction 451, ceci avec une force de répulsion déterminée.

La présence de ces moyens de répulsion 453 permet, avantageusement, d'éviter le glissement de ladite bande 431 par rapport au cylindre de traction 451 et, ainsi, d'améliorer la traction exercée sur ladite bande 431 par les moyens de traction 450.

Ces moyens de répulsion 453 comportent, d'une part, au moins un cylindre de répulsion, d'autre part, des moyens de montage en déplacement de ce cylindre de répulsion sur la platine 44 ainsi que par rapport au cylindre de traction 451 et, d'autre part encore, des moyens (notamment motorisés) d'entraînement en déplacement de ce cylindre de répulsion, notamment en direction du cylindre de traction 451.

A ce propos, on observera que ces moyens de montage en déplacement du cylindre de répulsion comportent un levier qui présente, d'une part, une première partie qui est montée en rotation sur la platine 44 (plus particulièrement autour d'un axe de rotation parallèle à l'axe de rotation du cylindre de traction 451), d'autre part, une deuxième partie, qui s'étend à partir de la première partie, et sur laquelle (plus particulièrement à l'extrémité libre de laquelle) le cylindre de répulsion est monté (plus particulièrement en rotation, notamment en libre rotation, autour d'un axe de rotation parallèle à l'axe de rotation du cylindre de traction 451). Ce levier coopère avec les moyens d'entraînement en déplacement du cylindre de répulsion, plus particulièrement par l'intermédiaire d'une troisième partie, que comporte ce levier, qui s'étend à partir de la première partie de ce levier, et qui peut former un angle compris entre 90° et 180° avec la deuxième partie.

Finalement, on observera que ces moyens de répulsion 453 sont interposés entre le cylindre de traction 451 et les moyens d'enroulement 46 de la bande 431.

A ce propos, on observera que ces moyens d'enroulement 46 de la bande 431 peuvent comporter, d'une part, un dévidoir 460, qui est solidaire de la bande 431 (dépourvue de pastille adhésive 2), et qui est monté en rotation autour d'un axe sur la platine 44 et, d'autre part, des moyens (de préférence motorisés) d'entraînement en rotation 461 du dévidoir 460.

A ce propos, on observera que l'axe autour duquel le rouleau 433 est monté en rotation et/ou l'axe autour duquel le cylindre de renvoi est monté en rotation et/ou l'axe autour duquel le cylindre de traction 451 est monté en rotation et/ou l'axe autour duquel le cylindre de répulsion est monté en rotation et/ou l'axe autour duquel le dévidoir 460 est monté en rotation s'étend(ent) de manière perpendiculaire par rapport au plan selon lequel ladite platine 44 s'étend.

Tel que mentionné ci-dessus, ledit au moins un dispositif de délivrance 4 comporte un rouleau 433 qui est monté en rotation sur la platine 44. Ledit au moins un dispositif de délivrance 4 peut, alors, également, comporter des moyens (de préférence motorisés) d'entraînement en rotation 48 de ce rouleau 433 autour dudit axe.

Selon une autre caractéristique, ledit au moins un dispositif de délivrance 4 comporte des moyens de gestion de ces moyens d'entraînement en rotation 48 du rouleau 433. De tels moyens de gestion sont, plus particulièrement, configurés pour gérer la vitesse de rotation du rouleau 433.

De manière alternative ou (et de préférence) additionnelle, ledit au moins un dispositif de délivrance 4 comporte des moyens de gestion des moyens d'entraînement en déplacement 45 dudit ensemble 430. De tels moyens de gestion sont, plus particulièrement, configurés pour gérer la vitesse d'entraînement en déplacement dudit ensemble 430. En fait, ces moyens de gestion sont configurés pour gérer les moyens d'entraînement en rotation 452 (notamment la vitesse de rotation du cylindre de traction 451) et/ou les moyens de répulsion 453 (notamment les moyens d'entraînement en déplacement du cylindre de répulsion, plus particulièrement la force de répulsion).

De manière alternative ou (et de préférence) additionnelle, ledit au moins un dispositif de délivrance 4 comporte des moyens de gestion des moyens d'enroulement 46 de la bande 431, plus particulièrement des moyens d'entraînement en rotation 461 du dévidoir 460. De tels moyens de gestion sont, plus particulièrement, configurés pour gérer les moyens d'entraînement 461 que comportent ces moyens d'enroulement 46. Ces moyens de gestion sont, alors, plus particulièrement configurés pour gérer la vitesse de rotation du dévidoir 460.

Selon une autre caractéristique, ledit au moins un dispositif de délivrance 4 comporte des moyens de détection de la présence d'au moins une pastille adhésive 2 sur la bande 431, ceci en amont des moyens de décollement 410.

Selon encore une autre caractéristique, ledit au moins un dispositif de délivrance 4 comporte des moyens de détection de la présence d'au moins une pastille adhésive 2 sur les moyens de réception 47.

Tel que mentionné ci-dessus, ces moyens de réception 47 comportent une surface de réception qui est configurée pour recevoir ladite au moins une portion de ladite au moins une partie décollée de ladite au moins une pastille adhésive 2. De manière additionnelle, ces moyens de réception 47 comportent un orifice, qui débouche au niveau de ladite surface de réception, et à l'intérieur duquel ou au droit duquel les moyens de détection sont positionnés.

En ce qui concerne les moyens de détection, ceux-ci peuvent comporter au moins un capteur, plus particulièrement une pluralité de capteurs, notamment en parallèle, voire (et de préférence) en série.

De manière additionnelle, ces moyens de détection peuvent, encore, comporter au moins une fibre optique (plus particulièrement une pluralité de fibres optiques, notamment en parallèle, voire - et de préférence - en série) associée à un tel capteur.

Tel que mentionné ci-dessus, les moyens de décollement 410 sont configurés en sorte que, en amont et au moins à proximité (voire au niveau) de ces moyens de décollement 410, ledit ensemble 430 s'étend selon un plan déterminé.

Ledit au moins un dispositif de délivrance 4 comporte, alors, des moyens de maintien qui sont configurés pour maintenir ledit ensemble 430 en sorte que celui-ci s'étende selon ce plan déterminé. De tels moyens de maintien peuvent adopter la forme d'au moins un doigt, qui est monté sur ladite platine 44, et qui s'étend de manière perpendiculaire par rapport au plan selon lequel s'étend cette platine 44.

Tel que mentionné ci-dessus, ledit au moins un dispositif de délivrance 4 comporte des moyens de montage en rotation qui sont configurés pour monter ledit rouleau 433 en rotation autour dudit axe de rotation sur la platine 44, ceci de manière réversible.

De tels moyens de montage en rotation comportent, d'une part, une embase, qui est montée en rotation autour dudit axe sur la platine 44, et qui est configurée pour être entraînée en rotation par les moyens d'entraînement 48, d'autre part, un bloc, qui est fixé sur l'embase, qui est solidaire en rotation autour de l'axe de l'embase, qui adopte une forme cylindrique, qui comporte une collerette (du côté opposé à l'embase), et qui s'étend selon l'axe, d'autre part encore, une couronne annulaire rigide, qui est positionnée autour du bloc, et qui coulisse en translation selon l'axe par rapport audit bloc, d'autre part aussi, une tige filetée, qui traverse le bloc, qui s'étend selon l'axe, qui est solidaire en déplacement de la couronne annulaire rigide, d'autre part également, un écrou, qui prend appui (directement ou indirectement) contre le bloc et/ou contre la collerette, qui coopère avec la tige filetée et qui est positionné à l'opposé de l'embase par rapport au bloc qui est alors interposé entre cette embase et cet écrou, et, d'autre part encore, au moins une bague annulaire déformable élastique (plus particulièrement compressible et expansible, notamment réalisée en un matériau synthétique et/ou polymère, plus particulièrement du polyuréthane), qui est positionnée autour du bloc, et qui est interposée entre la couronne annulaire rigide et la collerette du bloc. Le rouleau 433 comporte, alors, un mandrin, autour duquel la partie 432 de l'ensemble 430 est enroulée, et qui est positionné autour de ladite au moins bague annulaire déformable élastique. Sous l'effet d'un actionnement (plus particulièrement du serrage) de l'écrou, la couronne annulaire rigide s'approche de l'écrou ce qui compresse axialement ladite au moins une bague annulaire déformable élastique qui s'expand radialement et prend appui contre le mandrin du rouleau 433 réalisant, ainsi, l'immobilisation de ce rouleau 433 par rapport au bloc. Sous l'effet d'un actionnement inverse (plus particulièrement du déserrage) de l'écrou, la couronne annulaire rigide s'éloigne de l'écrou ce qui détend axialement ladite au moins une bague annulaire déformable élastique qui se rétracte radialement et ne prend plus appui contre le mandrin du rouleau 433 permettant, ainsi, le retrait du rouleau 433 par rapport au bloc. Ces moyens de montage en rotation permettent, avantageusement, un montage et un démontage rapides et aisés du rouleau 433 sur la platine 44.

A ce propos, on observera que de tels moyens de montage en rotation ne sont aucunement limités au dispositif de délivrance 4 conforme à l'invention mais peuvent, également, être envisagés pour le montage en rotation autour d'un axe d'un rouleau quelconque (notamment comportant un ensemble comportant une bande ainsi que des pastilles adhésives collées sur cette bande ou autre) sur une platine quelconque.

On observera que les caractéristiques particulières dudit au moins un dispositif de délivrance 4 conforme à l'invention permettent, avantageusement, la réception d'un rouleau 433 qui comporte un grand nombre de pastilles adhésives 2, en particulier plus de 300 pastilles adhésives 2.

De plus, ces caractéristiques particulières, plus particulièrement les moyens de gestion (des moyens d'entraînement en rotation 48 du rouleau 433 et/ou des moyens d'entraînement en déplacement 45 de l'ensemble 430 et/ou des moyens d'enroulement 46 de la bande 431), permettent, avantageusement, une délivrance d'une pluralité de pastilles adhésives 2 audit au moins un dispositif de dépose 11 de ces pastilles adhésives 2 avec une vitesse de délivrance élevée pouvant atteindre au moins une pastille adhésive 2 toutes les 3 secondes (voire toutes les 2 secondes), ceci avec une grande maîtrise, avec une grande précision, avec une grande fiabilité et avec un risque de rupture de l'ensemble 430 particulièrement réduit.

Tel que mentionné ci-dessus, le système de délivrance 1 comporte au moins deux dispositifs de délivrance 4 d'au moins une pastille adhésive 2. En fait, dans ce système de délivrance 1, lesdits au moins deux dispositifs de délivrance 4 d'au moins une pastille adhésive 2 présentent, chacun, au moins une partie des caractéristiques décrites ci-dessus.

Une autre caractéristique du système de délivrance 1 concerne le fait qu'il comporte des moyens de détection de présence 9 qui sont configurés pour détecter la présence d'au moins un dispositif de délivrance 4 d'au moins une pastille adhésive 2 parmi lesdits au moins deux dispositifs de délivrance 4 d'au moins une pastille adhésive 2, ceci dans la position rétractée dudit au moins un dispositif de délivrance 4 d'au moins une pastille adhésive 2. De tels moyens de détection 9 permettent, avantageusement, de détecter le positionnement approprié, par rapport au châssis 3, d'un dispositif de délivrance 4 d'au moins une pastille adhésive 2, ceci après sa mise en place au sein du système de délivrance 1 et en vue du remplacement d'un autre dispositif de délivrance 4 d'au moins une pastille adhésive 2, notamment ayant délivré toutes ses pastilles adhésives 2.

L'invention concerne, également, une installation de dépose 10 d'une pluralité de pastilles adhésives 2.

Cette installation de dépose 10 comporte, d'une part, un système de délivrance 1 d'une pluralité de pastilles adhésives 2 et, d'autre part, un dispositif de dépose 11 d'une pluralité de pastilles adhésives 2.

Dans cette installation de dépose 10, d'une part, le système de délivrance 1 d'une pluralité de pastilles adhésives 2 présente au moins une partie des caractéristiques décrites ci-dessus et, d'autre part, le dispositif de dépose 11 d'une pluralité de pastilles adhésives 2 comporte une pluralité de moyens de préhension (111 ; 111') qui sont configurés, chacun, pour saisir au moins une pastille adhésive 2 auprès de l'un au moins desdits au moins deux dispositifs de délivrance 4 que comporte ledit système de délivrance 1 d'une pluralité de pastilles adhésives 2.

En fait, ledit dispositif de dépose 11 d'une pluralité de pastilles adhésives 2 est, plus particulièrement conforme à celui décrit dans le document EP3878607A1.

En fait et en ce qui concerne le dispositif de dépose 11 d'une pluralité de pastilles adhésive 2, celui-ci comporte, d'une part, au moins un moyen de préhension 111 parmi la pluralité de moyens de préhension (111 ; 111') qui est configuré pour saisir au moins une pastille adhésive 2 qui présente, selon le cas, une taille déterminée et/ou une forme déterminée et/ou une composition déterminée et/ou une structure déterminée et, d'autre part, au moins un autre moyen de préhension 111' parmi la pluralité de moyens de préhension (111 ; 111') qui est configuré pour saisir au moins une pastille adhésive 2 qui présente, selon le cas, une autre taille et/ou une autre forme et/ou une autre composition et/ou une autre structure.

## Revendications

1. Système de délivrance (1) d'une pluralité de pastilles adhésives (2), ce système de délivrance (1) comporte, d'une part, un châssis (3), d'autre part, au moins deux dispositifs de délivrance (4) d'au moins une pastille adhésive (2) qui sont configurés, chacun, pour délivrer au moins une pastille adhésive (2) **caractérisé en ce qu'**il comporte d'autre part encore, des moyens de montage en déplacement (5) qui sont configurés pour monter au moins un dispositif de délivrance (4) d'au moins une pastille adhésive (2) parmi lesdits au moins deux dispositifs de délivrance (4) d'au moins une pastille adhésive (2), ceci en déplacement, d'une part, par rapport au châssis (3) et, d'autre part, entre une position rétractée et une position déployée par rapport au châssis (3).

2. Système de délivrance (1) d'une pluralité de pastilles adhésives (2) selon la revendication 1, **caractérisé par le fait que**, d'une part, au moins un dispositif de délivrance (4) d'au moins une pastille adhésive (2) parmi lesdits au moins deux dispositifs de délivrance (4) d'au moins une pastille adhésive (2) est configuré pour délivrer au moins une pastille adhésive (2) qui présente, selon le cas, une taille déterminée et/ou une forme déterminée et/ou une composition déterminée et/ou une structure déterminée et, d'autre part, au moins un autre dispositif de délivrance (4) d'au moins une pastille adhésive (2) parmi lesdits au moins deux dispositifs de délivrance (4) d'au moins une pastille adhésive (2) est configuré pour délivrer au moins une pastille adhésive (2) qui présente, selon le cas, une autre taille et/ou une autre forme et/ou une autre composition et/ou une autre structure.

3. Système de délivrance (1) d'une pluralité de pastilles adhésives (2) selon l'une quelconque des revendications précédentes, **caractérisé par le fait que** les moyens de montage en déplacement (5) comportent des moyens de montage en translation 6) dudit au moins un dispositif de délivrance (4) d'au moins une pastille adhésive (2) parmi lesdits au moins deux dispositifs de délivrance (4) d'au moins une pastille adhésive (2), ceci par rapport au châssis (3).

4. Système de délivrance (1) d'une pluralité de pastilles adhésives (2) selon la revendication 3, **caractérisé par le fait que** les moyens de montage en translation (6) comportent, d'une part, au moins une glissière (60) qui est associée audit au moins un dispositif de délivrance (4) d'au moins une pastille adhésive (2), respectivement audit châssis (3) et, d'autre part, au moins un coulisseau (61) qui est associé audit châssis (3), respectivement audit au moins un dispositif de délivrance (4) d'au moins une pastille adhésive (2), et qui coopère avec ladite glissière (60).

5. Système de délivrance (1) d'une pluralité de pastilles adhésives (2) selon la revendication 4, **caractérisé par le fait que** le châssis (3) comporte, d'une part, une platine (30) qui s'étend selon un plan et, d'autre part, au moins une paroi (31), qui s'étend à partir de la platine (30) ainsi que selon une direction sensiblement perpendiculaire au plan selon lequel cette platine (30) s'étend, et qui reçoit ledit au moins un coulisseau (61), respectivement ladite glissière (60).

6. Système de délivrance (1) d'une pluralité de pastilles adhésives (2) selon l'une quelconque des revendications précédentes, **caractérisé par le fait qu'**il comporte, d'une part, au moins un tiroir (7) qui est monté en déplacement par rapport au châssis (3) et par l'intermédiaire des moyens de montage en déplacement (5) et, d'autre part, des moyens de fixation (8) qui sont configurés pour fixer de manière réversible ledit au moins un dispositif de délivrance (4) d'au moins une pastille adhésive (2) sur ledit au moins un tiroir (7).

7. Système de délivrance (1) d'une pluralité de pastilles adhésives (2) selon la revendication 6, **caractérisé par le fait que** les moyens de fixation (8) comportent, d'une part, au moins une boutonnière (80) que comporte ledit au moins un tiroir (7) et, d'autre part, au moins un bouton (81), que comporte ou qui équipe ledit au moins un dispositif de délivrance (4) d'au moins une pastille adhésive (2), et qui coopère avec ladite au moins une boutonnière (80).

8. Système de délivrance (1) d'une pluralité de pastilles adhésives (2) selon l'une quelconque des revendications précédentes, **caractérisé par le fait que** lesdits au moins deux dispositifs de délivrance (4) d'au moins une pastille adhésive (2), d'une part, s'étendent, chacun, selon un plan (P) et, d'autre part, sont positionnés en sorte que les plans, selon lesquels lesdits au moins deux dispositifs de délivrance (4) d'au moins une pastille adhésive (2) s'étendent, sont au moins parallèles.

9. Système de délivrance (1) d'une pluralité de pastilles adhésives (2) selon l'une quelconque des revendications précédentes, **caractérisé par le fait que** lesdits au moins deux dispositifs de délivrance (4) d'au moins une pastille adhésive (2) présentent, chacun, d'une part, une partie avale (40) qui comporte des moyens de délivrance (41) qui sont configurés pour délivrer au moins une pastille adhésive (2) et, d'autre part, une partie amont (42) qui comporte des moyens de stockage (43) qui sont configurés pour stocker des pastilles adhésives (2) ainsi que pour alimenter les moyens de délivrance (41) avec ces pastilles adhésives (2).

10. Système de délivrance (1) d'une pluralité de pastilles adhésives (2) selon la revendication 9, **caractérisé par le fait que**, en position rétractée desdits au moins deux dispositifs de délivrance (4) d'au moins une pastille adhésive (2), lesdits au moins deux dispositifs de délivrance (4) d'au moins une pastille adhésive (2) sont positionnés en sorte que, d'une part, les parties avales (40) desdits au moins deux dispositifs de délivrance (4) d'au moins une pastille adhésive (2) sont juxtaposées et, d'autre part, les parties amonts (42) desdits au moins deux dispositifs de délivrance (4) d'au moins une pastille adhésive (2) sont, selon le cas, juxtaposées ou positionnées de part et d'autre des parties avales (40).

11. Système de délivrance (1) d'une pluralité de pastilles adhésives (2) selon l'une quelconque des revendications précédentes, **caractérisé par le fait qu'**il comporte des moyens de détection de présence (9) qui sont configurés pour détecter la présence d'au moins un dispositif de délivrance (4) d'au moins une pastille adhésive (2) parmi lesdits au moins deux dispositifs de délivrance (4) d'au moins une pastille adhésive (2), ceci dans la position rétractée dudit au moins un dispositif de délivrance (4) d'au moins une pastille adhésive (2).

12. Système de délivrance (1) d'une pluralité de pastilles adhésives (2) selon l'une quelconque des revendications 1 à 8, **caractérisé par le fait qu'**au moins un dispositif de délivrance (4) d'au moins une pastille adhésive (2) parmi lesdits au moins deux dispositifs de délivrance (4) d'au moins une pastille adhésive (2) comporte, d'une part, une platine (44), d'autre part, des moyens de stockage (43), qui sont configurés pour stocker des pastilles adhésives (2), qui comportent un ensemble (430) qui comporte une bande (431) ainsi qu'au moins une pastille adhésive (2) collée sur cette bande (431), et qui comporte aussi une partie (432) qui est enroulée sous la forme d'un rouleau (433) qui est monté en rotation autour d'un axe sur la platine (44), d'autre part aussi, des moyens de délivrance (41), qui sont configurés pour délivrer au moins une pastille adhésive (2), qui sont alimentés par lesdits moyens de stockage (43) avec des pastilles adhésives (2), et qui comportent des moyens de décollement (410) qui sont configurés pour décoller au moins une partie de ladite au moins une pastille adhésive (2) par rapport à ladite bande (431) et qui sont montés sur ladite platine (44), d'autre part encore, des moyens d'entraînement en déplacement (45) dudit ensemble (430) au moins par rapport aux moyens de décollement (410) et, d'autre part également, des moyens d'enroulement (46) de la bande (431) après le décollement de ladite au moins une pastille adhésive (2).

13. Installation de dépose (10) d'une pluralité de pastilles adhésives (2), ladite installation de dépose comporte, d'une part, un système de délivrance (1) d'une pluralité de pastilles adhésives (2) et, d'autre part, un dispositif de dépose (11) d'une pluralité de pastilles adhésives (2), **caractérisée par le fait que**, d'une part, le système de délivrance (1) d'une pluralité de pastilles adhésives (2) est conforme à l'une quelconque des revendications précédentes et, d'autre part, le dispositif de dépose (11) d'une pluralité de pastilles adhésives (2) comporte une pluralité de moyens de préhension (111 ; 111') qui sont configurés, chacun, pour saisir au moins une pastille adhésive (2) auprès de l'un au moins desdits au moins deux dispositifs de délivrance (4) que comporte ledit système de délivrance (1) d'une pluralité de pastilles adhésives (2).

14. Installation de dépose (10) d'une pluralité de pastilles adhésives (2) selon la revendication 13, **caractérisée par le fait que** le dispositif de dépose (11) d'une pluralité de pastilles adhésives (2) comporte, d'une part, au moins un moyen de préhension (111) parmi la pluralité de moyens de préhension (111 ; 111') qui est configuré pour saisir au moins une pastille adhésive (2) qui présente, selon le cas, une taille déterminée et/ou une forme déterminée et/ou une composition déterminée et/ou une structure déterminée et, d'autre part, au moins un autre moyen de préhension (111') parmi la pluralité de moyens de préhension (111 ; 111') qui est configuré pour saisir au moins une pastille adhésive (2) qui présente, selon le cas, une autre taille et/ou une autre forme et/ou une autre composition et/ou une autre structure.

## Patentansprüche

1. Abgabesystem (1) zur Abgabe mehrerer Klebepads (2), wobei dieses Abgabesystem (1) aufweist:
einerseits ein Gestell (3), und
andererseits mindestens zwei mindestens ein Klebepad (2) abgebende Abgabevorrichtungen (4), die jeweils konfiguriert sind, mindestens ein Klebepad (2) abzugeben,
**dadurch gekennzeichnet, dass** es andererseits auch noch aufweist:
Verrückung-Montageeinrichtungen (5), die konfiguriert sind, von den mindestens zwei mindestens ein Klebepad (2) abgebenden Abgabevorrichtungen (4) mindestens eine mindestens ein Klebepad (2) abgebende Abgabevorrichtung (4) zu montieren und zwar durch Verrücken einerseits bezüglich des Gestells (3) und andererseits zwischen einer zurückgezogenen Position und einer ausgefahrenen Position bezüglich des Gestells (3).

2. Abgabesystem (1) zur Abgabe mehrerer Klebepads (2) nach Anspruch 1, **dadurch gekennzeichnet, dass**
einerseits von den mindestens zwei mindestens ein Klebepad (2) abgebenden Abgabevorrichtungen (4) mindestens eine mindestens ein Klebepad (2) abgebende Abgabevorrichtung (4) konfiguriert ist, mindestens ein Klebepad (2) abzugeben, das je nach Fall eine bestimmte Größe und/oder eine bestimmte Form und/oder eine bestimmte Zusammensetzung und/oder eine bestimmte Struktur hat, und
andererseits von den mindestens zwei mindestens ein Klebepad (2) abgebenden Abgabevorrichtungen (4) mindestens eine andere mindestens ein Klebepad (2) abgebende Abgabevorrichtung (4) konfiguriert ist, mindestens ein Klebepad (2) abzugeben, das je nach Fall eine andere Größe und/oder eine andere Form und/oder eine andere Zusammensetzung und/oder eine andere Struktur hat.

3. Abgabesystem (1) zur Abgabe mehrerer Klebepads (2) nach einem der vorstehenden Ansprüche, **dadurch gekennzeichnet, dass** die Verrückung-Montageeinrichtungen (5) aufweisen: Verschiebung-Montageeinrichtungen (6) zum Verschieben der mindestens einen mindestens ein Klebepad (2) abgebenden Abgabevorrichtung (4) der mindestens zwei mindestens ein Klebepad (2) abgebenden Abgabevorrichtungen (4) bezüglich des Gestells (3).

4. Abgabesystem (1) zur Abgabe mehrerer Klebepads (2) nach Anspruch 3, **dadurch gekennzeichnet, dass** die Verschiebung-Montageeinrichtungen (6) aufweisen:
einerseits mindestens eine Gleitschiene (60), die mit der mindestens einen mindestens ein Klebepad (2) abgebenden Abgabevorrichtung (4) bzw. mit dem Gestell (3) assoziiert ist, und
andererseits mindestens einen Schieber (61), der mit dem Gestell (3) bzw. mit der mindestens einen mindestens ein Klebepad (2) abgebenden Abgabevorrichtung (4) assoziiert ist.

5. Abgabesystem (1) zur Abgabe mehrerer Klebepads (2) nach Anspruch 4, **dadurch gekennzeichnet, dass** das Gestell (3) aufweist:
einerseits eine Platte (30), die sich in einer Ebene erstreckt, und
andererseits mindestens eine Wand (31), die sich von der Platte (30) aus sowie in eine Richtung, die im Wesentlichen senkrecht zu der Ebene ist, in der sich diese Platte (30) erstreckt, erstreckt und die mindestens einen Schieber (61) bzw. die Gleitschiene (60) empfängt.

6. Abgabesystem (1) zur Abgabe mehrerer Klebepads (2) nach einem der vorstehenden Ansprüche, **dadurch gekennzeichnet, dass** es aufweist:
einerseits mindestens ein Ausziehfach (7), das bezüglich des Gestells (3) und via den Verrückung-Montageeinrichtungen (5) verrückbar montiert ist, und
andererseits Fixierungseinrichtungen (8), die konfiguriert sind, auf reversible Weise die mindestens eine mindestens ein Klebepad (2) abgebende Abgabevorrichtung (4) an dem mindestens einen Ausziehfach (7) zu fixieren.

7. Abgabesystem (1) zur Abgabe mehrerer Klebepads (2) nach Anspruch 6, **dadurch gekennzeichnet, dass** die Fixierungseinrichtungen (8) aufweisen:
einerseits mindestens ein Knopfloch (80), das das mindestens eine Ausziehfach (7) aufweist, und
anderseits mindestens einen Knopf (81), den die mindestens eine mindestens ein Klebepad (2) abgebende Abgabevorrichtung (4) aufweist oder mit dem sie ausgestattet ist und der mit dem mindestens einen Knopfloch (80) zusammenwirkt.

8. Abgabesystem (1) zur Abgabe mehrerer Klebepads (2) nach einem der vorstehenden Ansprüche, **dadurch gekennzeichnet, dass** die mindestens zwei mindestens ein Klebepad (2) abgebenden Abgabevorrichtungen (4)
einerseits sich jeweils in einer Ebene (P) erstrecken, und
andererseits derart angeordnet sind, dass die Ebenen, in denen sich die mindestens zwei mindestens ein Klebepad (2) abgebenden Abgabevorrichtungen (4) erstrecken, mindestens parallel sind.

9. Abgabesystem (1) zur Abgabe mehrerer Klebepads (2) nach einem der vorstehenden Ansprüche, **dadurch gekennzeichnet, dass** die mindestens zwei mindestens ein Klebepad (2) abgebenden Abgabevorrichtungen (4) jeweils aufweisen:
einerseits einen stromab gelegenen Teil (40), der Abgabeeinrichtungen (41) aufweist, die konfiguriert sind, mindestens ein Klebepad (2) abzugeben, und
andererseits einen stromauf gelegenen Teil (42), der Vorratsspeichereinrichtungen (43) aufweist, die konfiguriert sind, Klebepads (2) vorrätig zu halten sowie die Abgabeeinrichtungen (41) mit diesen Klebepads (2) zu speisen.

10. Abgabesystem (1) zur Abgabe mehrerer Klebepads (2) nach Anspruch 9, **dadurch gekennzeichnet, dass** in der zurückgezogenen Position der mindestens zwei mindestens ein Klebepad (2) abgebenden Abgabevorrichtungen (4) die mindestens zwei mindestens ein Klebepad (2) abgebenden Abgabevorrichtungen (4) derart angeordnet sind, dass
einerseits die stromab gelegenen Teile (40) der mindestens zwei mindestens ein Klebepad (2) abgebenden Abgabevorrichtungen (4) nebeneinander angeordnet sind, und
andererseits die stromauf gelegenen Teile (42) der mindestens zwei mindestens ein Klebepad (2) abgebenden Abgabevorrichtungen (4) je nach Fall nebeneinander oder beiderseits von stromab gelegenen Teilen (40) angeordnet sind.

11. Abgabesystem (1) zur Abgabe mehrerer Klebepads (2) nach einem der vorstehenden Ansprüche, **dadurch gekennzeichnet, dass** es Anwesenheitsdetektionseinrichtungen (9) aufweist, die konfiguriert sind, die Anwesenheit mindestens einer mindestens ein Klebepad (2) abgebenden Abgabevorrichtung (4) der mindestens zwei mindestens ein Klebepad (2) abgebenden Abgabevorrichtungen (4) zu detektieren, und zwar in der zurückgezogenen Position der mindestens einen mindestens ein Klebepad (2) abgebenden Abgabevorrichtung (4).

12. Abgabesystem (1) zur Abgabe mehrerer Klebepads (2) nach einem der Ansprüche 1 bis 8, **dadurch gekennzeichnet, dass** mindestens eine mindestens ein Klebepad (2) abgebende Abgabevorrichtung (4) der mindestens zwei mindestens ein Klebepad (2) abgebenden Abgabevorrichtungen (4) aufweist:
einerseits eine Platte (44),
andererseits Vorratsspeichereinrichtungen (43), die konfiguriert sind, Klebepads (2) vorrätig zu halten, und die eine Anordnung (430) aufweisen, die ein Band (431) sowie mindestens ein auf diesem Band (431) klebendes Klebepad (2) aufweist, und die auch einen Teil (432) aufweist, der in Form einer Rolle (433) aufgerollt ist, die um eine Achse drehbar an der Platte (44) montiert ist,
andererseits auch Abgabeeinrichtungen (41), die konfiguriert sind, mindestens ein Klebepad (2) abzugeben, die von den Vorratsspeichereinrichtungen (43) mit Klebepads (2) gespeist werden, und Ablöseeinrichtungen (410) aufweisen, die konfiguriert sind, mindestens einen Teil des mindestens einen Klebepads (2) von dem Band (431) abzulösen, und an der Platte (44) montiert sind,
andererseits auch noch Antriebsreinrichtungen (45) zum Verrücken der Anordnung (430) zumindest bezüglich der Ablöseeinrichtungen (410), und
anderseits außerdem Einrichtungen (46) zum Aufrollen des Bands (431) nach Ablösen des mindestens einen Klebepad (2).

13. Aufbringungsanlage (10) zum Aufbringen mehrerer Klebepads (2), wobei diese Aufbringungsanlage aufweist:
einerseits ein Abgabesystem (1) zur Abgabe mehrerer Klebepads (2), und
andererseits eine Vorrichtung (11) zum Aufbringen mehrerer Klebepads (2),
**dadurch gekennzeichnet, dass**
einerseits das Abgabesystem (1) zur Abgabe mehrerer Klebepads (2) einem der vorstehenden Ansprüche entspricht, und
andererseits die Vorrichtung (11) zum Aufbringen mehrerer Klebepads (2) mehrere Greifeinrichtungen (111; 111') aufweist, die jeweils konfiguriert sind, in der Nähe von mindestens einer der mindestens zwei Abgabevorrichtungen (4), die das Abgabesystem (1) zur Abgabe mehrerer Klebepads (2) aufweist, mindestens ein Klebepad (2) zu greifen.

14. Aufbringungsanlage (10) zum Aufbringen mehrerer Klebepads (2) nach Anspruch 13, **dadurch gekennzeichnet, dass** die Vorrichtung (11) zum Aufbringen mehrerer Klebepads (2) aufweist:
einerseits von den mehreren Greifeinrichtungen (111; 111') mindestens eine Greifeinrichtung (111), die konfiguriert ist, mindestens ein Klebepad (2) zu greifen, das je nach Fall eine bestimmte Größe und/oder eine bestimmte Form und/oder eine bestimmte Zusammensetzung und/oder eine bestimmte Struktur hat, und
andererseits von den mehreren Greifeinrichtungen (111; 111') mindestens eine andere Greifeinrichtung (111'), die konfiguriert ist, mindestens ein Klebepad (2) zu greifen, das je nach Fall eine andere Größe und/oder eine andere Form und/oder eine andere Zusammensetzung und/oder eine andere Struktur hat.

## Claims

1. System (1) for delivering a plurality of adhesive pads (2), this delivery system (1) comprises on the one hand a frame (3) and on the other hand at least two devices (4) for delivering at least one adhesive pad (2), which are each configured to deliver at least one adhesive pad (2), **characterised in that** it further includes moving mounting means (5) that are configured to mount at least one device (4) for delivering at least one adhesive pad (2) among said at least two devices (4) for delivering at least one adhesive pad (2), and this while moving on the one hand relative to the frame (3) and on the other hand between a retracted position and a deployed position relative to the frame (3).

2. System (1) for delivering a plurality of adhesive pads (2) according to claim 1, **characterised in that**, on the one hand, at least one device (4) for delivering at least one adhesive pad (2) among said at least two devices (4) for delivering at least one adhesive pad (2) is configured to deliver at least one adhesive pad (2) which has, as the case may be, a determined size and/or a determined shape and/or a determined composition and/or a determined structure and, on the other hand, at least one other device (4) for delivering at least one adhesive pad (2) among said at least two devices (4) for delivery at least one adhesive pad (2) is configured to deliver at least one adhesive pad (2) that has, as the case may be, another size and/or another shape and/or another composition and/or another structure.

3. System (1) for delivering a plurality of adhesive pads (2) according to any one of the preceding claims, **characterised in that** the moving mounting means (5) include means for translational mounting (6) of said at least one device (4) for delivering at least one adhesive pad (2) among said at least two devices (4) for delivering at least one adhesive pad (2), this with respect to the frame (3).

4. System (1) for delivering a plurality of adhesive pads (2) according to claim 3, **characterised in that** the translational mounting means (6) include, on the one hand, at least one slider (60) which is associated with said at least one device (4) for delivering at least one adhesive pad (2), and respectively with said frame (3) and, on the other hand, at least one runner (61) which is associated with said frame (3), and respectively with said at least one device (4) for delivering at least one adhesive pad (2), and which cooperates with said slider (60).

5. System (1) for delivering a plurality of adhesive pads (2) according to claim 4, **characterised in that** the frame (3) includes, on the one hand, a plate (30) that extends along a plane and, on the other hand, at least one wall (31), which extends from the plate (30) as well as in a direction substantially perpendicular to the plane along which this plate (30) extends, and which receives said at least one runner (61) and respectively said slider (60).

6. System (1) for delivering a plurality of adhesive pads (2) according to any one of the preceding claims, **characterised in that** it comprises, on the one hand, at least one drawer (7) which is mounted so as to move relative to the frame (3) and via the moving mounting means (5) and, on the other hand, fastening means (8) which are configured to reversibly fasten said at least one device (4) for delivering at least one adhesive pad (2) on said at least one drawer (7).

7. System (1) for delivering a plurality of adhesive pads (2) according to claim 6, **characterised in that** the fastening means (8) comprise, on the one hand, at least one buttonhole (80) that said at least one drawer (7) has and, on the other hand, at least one button (81), which said at least one device (4) for delivering at least one adhesive pad (2) has or is equipped with, and which cooperates with said at least one buttonhole (80).

8. System (1) for delivering a plurality of adhesive pads (2) according to any one of the preceding claims, **characterised in that** said at least two devices (4) for delivering at least one adhesive pad (2) on the one hand each extend along a plane (P) and, on the other hand, are positioned so that the planes, wherein said at least two devices (4) for delivering at least one adhesive pad (2) extend, are at least parallel.

9. System (1) for delivering a plurality of adhesive pads (2) according to any one of the preceding claims, **characterised in that** said at least two devices (4) for delivering at least one adhesive pad (2) each have, on the one hand, a downstream part (40) that comprises delivery means (41) that are configured to deliver at least one adhesive pad (2) and, on the other hand, an upstream part (42) that comprises storage means (43) which are configured to store adhesive pads (2) as well as to supply the delivery means (41) with these adhesive pads (2).

10. System (1) for delivering a plurality of adhesive pads (2) according to claim 9, **characterised in that**, in the retracted position of said at least two devices (4) for delivering at least one adhesive pad (2), said at least two devices (4) for delivering at least one adhesive pad (2) are positioned such that, on the one hand, the downstream parts (40) of said at least two devices (4) for delivering at least one adhesive pad (2) are adjacent and, on the other hand, the upstream parts (42) of said at least two devices (4) the delivery at least one adhesive pad (2) are, as the case may be, juxtaposed or positioned on either side of the downstream parts (40).

11. System (1) for delivering a plurality of adhesive pads (2) according to any one of the preceding claims, **characterised in that** it comprises presence detection means (9) that are configured to detect the presence of at least one device (4) for delivering at least one adhesive pad (2) among said at least two devices (4) for delivering at least one adhesive pad (2), this in the retracted position of said at least one device (4) for delivering at least one adhesive pad (2).

12. System (1) for delivering a plurality of adhesive pads (2) according to any one of claims 1 to 8, **characterised in that** at least one device (4) for delivering at least one adhesive pad (2) among said at least two devices (4) for delivering at least one adhesive pad (2) comprises, on the one hand, a plate (44), on the other hand, storage means (43), which are configured to store adhesive pads (2), which comprise an assembly (430) which comprises a strip (431) as well as at least one adhesive pad (2) bonded to this strip (431), and which also comprises a part (432) which is wound in the form of a roller (433) which is mounted for rotation about an axis on the plate (44), on the other hand also delivery means (41), which are configured to deliver at least one adhesive pad (2), which are supplied by said storage means (43) with adhesive pads (2), and which comprise detachment means (410) which are configured to detach at least a part of said at least one adhesive pad (2) with respect to said strip (431) and which are mounted on said plate (44), on the other hand, means (45) for moving said assembly (430) at least with respect to the detachment means (410) and, on the other hand, also means (46) for winding the strip (431) after detachment of said at least one adhesive pad (2).

13. Installation (10) for depositing a plurality of adhesive pads (2), said depositing installation comprises, on the one hand, a system (1) for delivering a plurality of adhesive pads (2) and, on the other hand, a device for depositing (11) a plurality of adhesive pads (2), **characterised in that**, on the one hand,, the system (1) for delivery a plurality of adhesive pads (2) is in accordance with any one of the preceding claims and, on the other hand, the device (11) for depositing a plurality of adhesive pads (2) comprises a plurality of gripping means (111; 111') which are each configured to grip at least one adhesive pad (2) from one of said at least two delivery devices (4) that said system (1) for delivery a plurality of adhesive pads (2) has.

14. Installation (10) for depositing a plurality of adhesive pads (2) according to claim 13, **characterised in that** the device (11) for depositing a plurality of adhesive pads (2) comprises, on the one hand, at least one gripping means (111) among the plurality of gripping means (111; 111') which is configured to grip at least one adhesive pad (2) which has, as the case may be, a determined size and/or a determined shape and/or a determined composition and/or a determined structure and, on the other hand, at least one other gripping means (111') among the plurality of gripping means (111; 111') which is configured to grip at least one adhesive pad (2) which has, as the case may be, another size and/or another shape and/or another composition and/or another structure.
